# EUROPÄISCHE PATENTSCHRIFT

(11) **EP 1 748 238 B1**
(45) Veröffentlichungstag und Bekanntmachung des Hinweises auf die Patenterteilung: **02.01.2008**
(21) Anmeldenummer: 05400023.7
(22) Anmeldetag: 26.07.2005
(51) Int. Cl.: F16K 31/06

(54) **Elektromagnetventil**
Electromagnetic valve
Soupape électromagnétique

(43) Veröffentlichungstag der Anmeldung: 31.01.2007
(73) Patentinhaber: Festo AG & Co., 73734 Esslingen (DE)
(72) Erfinder: Berger, Rolf, 72631 Aichtal (DE); Diehl, Volkart, 73732 Esslingen (DE)
(74) Vertreter: Abel, Martin

(56) Entgegenhaltungen:
- EP-A- 0 722 061
- DE-A1- 10 340 941
- DE-A1- 19 901 090

## Beschreibung

Die Erfindung betrifft ein Magnetventil, mit einem von Ventilkanälen durchsetzten Grundkörper und einem eine Elektromagneteinrichtung aufweisenden Magnetkopf, die in Richtung einer Hauptachse aufeinanderfolgend angeordnet sind und zwischen denen sich eine mit mehreren Ventilkanälen kommunizierende Ventilkammer befindet, die einen als Ventilglied fungierenden, in Richtung der Hauptachse beweglichen Magnetanker enthält, der ein plattenförmiges Element mit in Richtung der Hauptachse orientierten Grundflächen ist, wobei eine ortsfeste Magnetkernanordnung der Elektromagneteinrichtung eine dem beweglichen Magnetanker zugewandte Polflächenanordnung aufweist, von der der bewegliche Magnetanker bei elektrischer Aktivierung der Elektromagneteinrichtung angezogen wird und wobei sich zwischen der Polflächenanordnung und dem beweglichen Magnetanker eine der Reduzierung des Magnetankeraufpralles dienende, aus nicht ferromagnetischem Material bestehende Dämpfungsplattenanordnung befindet.

Ein aus der DE 39 39 537 B4 bekanntes Magnetventil enthält einen auf einem Grundkörper sitzenden Magnetkopf mit einer Magnetspule und einem diesbezüglich verschiebbaren stößelartigen Magnetanker. Der Magnetanker ist einenends ausgebildet, um einen Ventilsitz wahlweise abzusperren oder freizugeben. Andernends liegt ihm koaxial ein ortsfester Magnetkern gegenüber, zu dem hin er bei Aktivierung der Magnetspule gezogen wird. Eine dem Magnetkern axial vorgelagerte Permanentmagnetscheibe ist in der Lage, den entsprechend ausgelenkten Magnetanker bis zum Aufbringen eines entgegengesetzten Umschaltimpulses festzuhalten. Zwischen der Permanentmagnetscheibe und dem Magnetanker befindet sich eine von der Permanentmagnetscheibe festgehaltene und folglich ferromagnetische Dämpfungsplatte. Sie soll eine mechanische Abschirmung der ansonsten stoßempfindlichen Permanentmagnetscheibe gewährleisten.

Dieses bekannte Magnetventil ist nicht für besonders hohe Schaltfrequenzen des vom beweglichen Magnetanker gebildeten Ventilgliedes ausgelegt. Die relativ große Masse des Ventilgliedes behindert die Bewegungsabläufe. Außerdem wird das Lösen des Ventilgliedes von der Dämpfungsplatte erschwert, weil diese unmittelbar eine Polfläche bildet und somit ein direkter Kontakt zwischen der Polfläche und dem weichmagnetischen Magnetanker vorliegt.

Die EP-A-0 722 061 zeigt ein Magnetventil der eingangs genannten Art, dessen Magnetkernanordnung einen stabförmigen Magnetkern aufweist, dessen Stirnfläche als Polfläche fungiert, der ein plattenförmiger Magnetanker gegenüberliegt. Vor der Polfläche befindet sich eine Öffnung, die durch den Magnetanker verschlossen werden kann. Eine Gummibeschichtung des Magnetankers ermöglicht ein geräuscharmes Öffnen und Verschließen der Öffnung.

Es ist die Aufgabe der Erfindung, ein Magnetventil zu schaffen, das bei geringer Verschleißanfälligkeit hohe Schaltfrequenzen bzw. Schaltgeschwindigkeiten des beweglichen Magnetankers zulässt.

Zur Lösung dieser Aufgabe ist vorgesehen, dass dem beweglichen Magnetanker mehrere quer zu der Hauptachse zueinander beabstandete Polflächen unterschiedlicher Polarität der Polflächenanordnung gegenüberliegen, wobei die Dämpfungsplattenanordnung ortsfest bezüglich der Magnetkernanordnung angeordnet ist und sich über jede der unterschiedlich polarisierten Polflächen zumindest teilweise hinweg erstreckt

Durch die Flachbauweise verfügt der bewegliche Magnetanker über eine relativ geringe Masse, was hohe Beschleunigungswerte ermöglicht. Zugleich kann aufgrund der mehreren nebeneinander angeordneten Polflächen eine hohe Anzugskraft ausgeübt werden. Dies alles ermöglicht Umschaltvorgänge des Magnetankers mit sehr hoher Frequenz und Schaltgeschwindigkeit. Beispielsweise kann die Schaltfrequenz im Bereich von 1000 Hz liegen. Die hierbei normalerweise auftretenden hohen Aufprallkräfte werden durch die ortsfest bezüglich der Magnetkernanordnung angeordnete Dämpfungsplattenanordnung auf ein für die Ventilkomponenten verträgliches Maß reduziert. Die Dämpfungsplattenanordnung erstreckt sich zwischen jeder der mehreren Polflächen und dem jeweils gegenüberliegenden Abschnitt des plattenförmigen Magnetankers, so dass der Aufprall wirksam abgefedert und auch abgedämpft wird, ohne dass eine Verkantungsgefahr bestünde. Bedingt durch die nicht ferromagnetische Ausgestaltung der Dämpfungsplattenanordnung wird außerdem ein direkter Kontakt zwischen dem Magnetanker und den Polflächen vermieden, was der Entstehung extremer Stellkräfte entgegenwirkt und ein problemloses Ablösen des Magnetankers von der Dämpfungsplattenanordnung bei der umgekehrten Schaltrichtung gewährleistet.

Aus der DE 199 01 090 A1 geht zwar bereits ein Magnetventil mit einem plattenförmigen Magnetanker und einer mehrere Polflächen aufweisenden Magnetkernanordnung hervor. Der Magnetanker ist zudem mit einem Dämpfungselement bestückt, das eine Geräuschdämpfung beim Aufprall des Magnetankers bewirken soll. Das Dämpfungselement erstreckt sich allerdings lediglich als ringförmige Randbewehrung rings um den scheibenförmigen Magentanker, so dass die wirksame Kontaktfläche zwischen dem Dämpfungselement und der mit dieser zusammenwirkenden Polplatte der Magnetkernanordnung relativ klein ist. Zwischen dem zentralen Bereich des Magnetankers und der diesem axial gegenüberliegenden zentralen Polfläche, die an der Stirnseite eines zylindrischen Magnetkerns vorgesehen ist, finden sich überhaupt keine Dämpfungsmaßnahmen. Bei hohen Frequenzen kann der Magnetanker folglich zu Schwingungen angeregt werden, durch die er im zentralen Bereich ungedämpft gegen die Polfläche prallt, was eine Beschädigung oder gar Zerstörung insbesondere des Magnetankers hervorrufen kann, was dazu führt, dass das Magnetventil nur mit begrenzter Leistung betrieben werden kann.

Vorteilhafte Weiterbildungen der Erfindung gehen aus den Unteransprüchen hervor.

Von Vorteil ist es, wenn die Dämpfungsplattenanordnung aus einer einzigen Dämpfungsplatte besteht, die sich gleichzeitig über jede der unterschiedlich polarisierten Polflächen der Magnetkernanordnung wenigstens teilweise und bevorzugt zur Gänze hinweg erstreckt.

Eine besonders bevorzugte Bauform sieht vor, dass die Dämpfungsplattenanordnung integraler Bestandteil einer Zwischenplatte ist, die zwischen dem Grundkörper und dem Magnetkopf sitzt. Zweckmäßigerweise handelt es sich um eine einstückige Zwischenplatte, was eine besonders rationelle Fertigung zulässt. Die Dämpfungsplattenanordnung und zweckmäßigerweise die gesamte Zwischenplatte kann zwar prinzipiell aus einem nicht ferromagnetischen Metall bestehen, ist zweckmäßigerweise jedoch aus Kunststoffmaterial hergestellt.

Die Zwischenplatte kann eine dem Grundkörper zugewandte Ausnehmung aufweisen, in der der Magnetanker zur Ausführung seiner Schaltbewegung in Richtung der Hauptachse beweglich aufgenommen ist. Der Boden der Ausnehmung bildet hierbei die zweckmäßigerweise in Gestalt einer einzigen Dämpfungsplatte ausgebildete Dämpfungsplattenanordnung. Die Seitenwand der Ausnehmung ist zweckmäßigerweise so ausgebildet, dass sie mindestens eine den Magnetanker quer zur Schaltrichtung stabilisierende Führungsfläche definiert.

Die Zwischenplatte kann nach Art eines Deckels an den Grundkörper angesetzt sein und eine die Ventilkammer an der dem Magnetkopf zugewandten Seite begrenzende Begrenzungswand bilden. Es kann insbesondere vorgesehen sein, dass die Zwischenplatte gemeinsam mit dem Grundkörper die den beweglichen Magnetanker aufnehmende Ventilkammer definiert. Bevorzugt verfügt die Dämpfungsplattenanordnung über eine durchweg geschlossene Plattenfläche. Allerdings können auch eine oder mehrere Durchbrechungen, insbesondere nach Art einer Perforation, vorgesehen sein.

Die Dämpfungsplattenanordnung kann so ausgebildet sein, dass sie zumindest in den die Polflächenanordnung überdeckenden Bereichen und insbesondere zur Gänze eine konstante Wandstärke aufweist. Über die Dicke der Wandstärke kann die Federkennlinie der Dämpfungsplattenanordnung und folglich die Aufprallkraft des Magnetankers beeinflusst werden. Auch über die Art des Materials der Dämpfungsplattenanordnung kann auf diese Kennlinie Einfluss genommen werden.

Eine weitere Einflussmöglichkeit auf das Dämpfungsverhalten der Dämpfungsplattenanordnung besteht in der geometrischen Gestaltung. Anstatt die Dämpfungsplattenanordnung an der dem beweglichen Magnetanker zugewandten Seite glattflächig auszuführen, kann sie dort mit einer durch Erhebungen und Vertiefungen gebildeten Oberflächenstruktur versehen sein. Die Oberflächenstruktur kann sich insbesondere aus einer Vielzahl von zueinander parallelen rippenartigen Erhebungen und dazwischenliegenden nutartigen Vertiefungen zusammensetzen. Alternativ wäre auch eine Oberflächenstruktur mit vielen punktuell verteilten Erhebungen denkbar, beispielsweise als noppenartige Struktur.

Die Dämpfungsplattenanordnung kann auch zur Schaltstellungsanzeige des Magnetankers herangezogen werden. Hierbei wird zweckmäßigerweise ein Stromkreis vorgesehen, der zwei auf den strukturierten Erhebungen der Dämpfungsplattenanordnung ausgebildete, elektrisch leitende Kontaktflächen aufweist, die zu einem Schalter gehören, der als Schaltelement den Magnetanker beinhaltet. Bei Anlage des Magnetankers an der Dämpfungsplattenanordnung werden über den elektrisch leitenden Magnetanker die beiden Kontaktflächen verbunden und der Stromkreis geschlossen, woraus ein die Schaltstellung meldendes Signal resultiert.

Bei den Kontaktflächen handelt es sich insbesondere um lokale Metallisierungen an einer oder zweckmäßigerweise an mindestens zwei Erhebungen. In diesem Zusammenhang kann die Dämpfungsplattenanordnung als MID-Komponente ausgeführt sein (MID = Molded Interconnect Device).

Besonders hohe Schaltgeschwindigkeiten sind realisierbar, wenn der bewegliche Magnetanker in Richtung der Hauptachse lose in der Ventilkammer angeordnet ist und nicht durch Federvorspannung in eine Schaltstellung vorgespannt ist. Der Umschaltvorgang wird hierbei in der einen Richtung durch die Magnetkraft und in der anderen Richtung durch den Druck des in der Ventilkammer befindlichen Fluides bewirkt.

Das Magnetventil besitzt zweckmäßigerweise eine 2/2-Funktionalität. Allerdings können auch andere Schaltfunktionalitäten realisiert werden, beispielsweise eine 3/2-Funktionalität.

Nachfolgend wird die Erfindung anhand der beiliegenden Zeichnung näher erläutert. In dieser zeigen:
- Figur 1: einen Längsschnitt durch eine bevorzugte Ausführungsform des erfindungsgemäßen Magnetventils im deaktivierten Zustand der Elektromagneteinrichtung,
- Figur 2: einen Querschnitt durch das Magnetventil gemäß Schnittlinie II-II aus Figur 1 im Bereich der die Dämpfungsplattenanordnung umfassenden Zwischenplatte, und
- Figur 3: die Zwischenplatte in einer perspektivischen Einzeldarstellung mit Blick auf eine im Betrieb den beweglichen Magnetanker aufnehmende Ausnehmung.

Das in seiner Gesamtheit mit Bezugsziffer 1 bezeichnete Magnetventil enthält einen beim Ausführungsbeispiel mehrteiligen Grundkörper 2 und einen in Richtung einer Hauptachse 3 daran befestigten Magnetkopf 4. Die Hauptachse 3 fällt beim Ausführungsbeispiel mit der Hochachse zusammen.

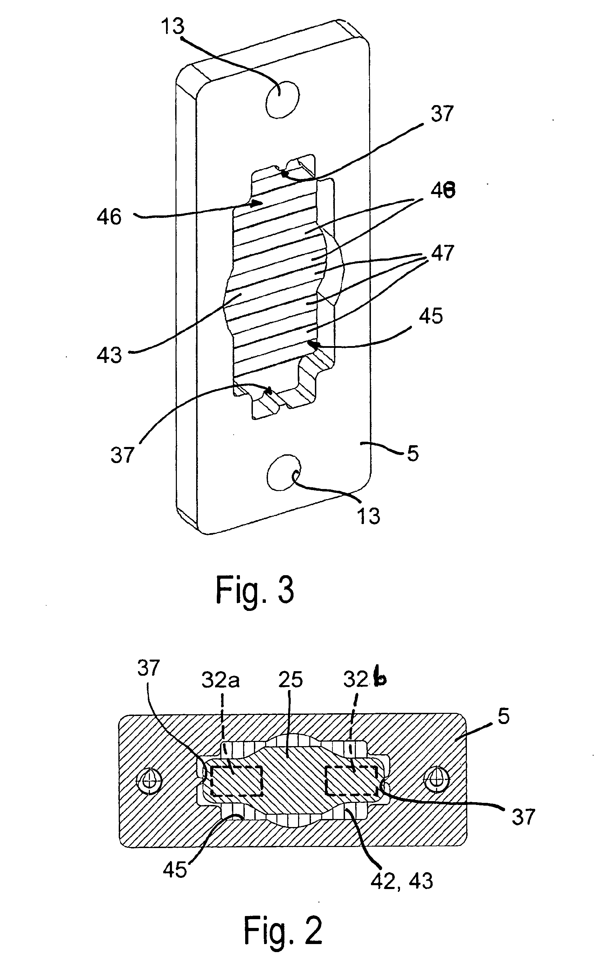

Der Magnetkopf 4 kann direkt an den Grundkörper 2 angebaut sein. Zweckmäßiger ist aber die beispielhafte Lösung, bei der die Montage unter Zwischenschaltung eines plattenartigen Elementes vorgenommen ist, das als Zwischenplatte 5 bezeichnet sei. Die Zwischenplatte 5 ist auch nochmals in Figuren 2 und 3 abgebildet.

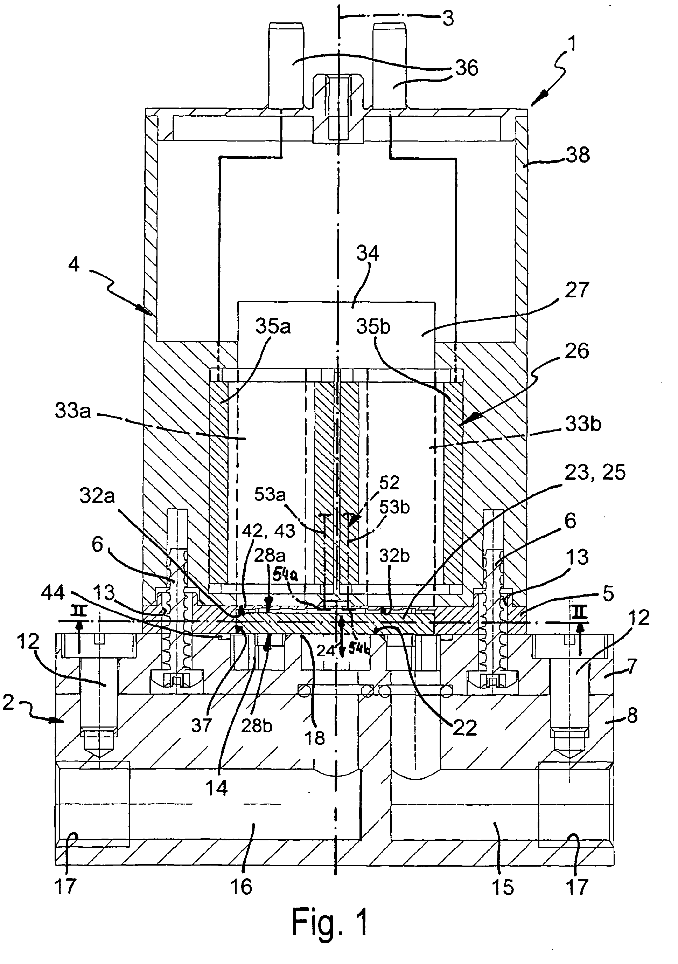

Die Befestigung des Magnetventils 1 am Grundkörper 2 kann prinzipiell auf beliebige Art erfolgen, wird zweckmäßigerweise jedoch durch eine Schraubverbindung realisiert. In Figur 1 sind diesem Zweck dienende Befestigungsschrauben bei 6 angedeutet.

Der beispielhafte Grundkörper 2 besitzt ein dem Magnetkopf 4 zugeordnetes, bevorzugt plattenartiges Oberteil 7 und ein daran befestigtes Unterteil 8. Die Schraubverbindung seitens der Befestigungsschrauben 6 stützt sich grundkörperseitig am Oberteil 7 ab. Das Oberteil 7 ist durch weitere Befestigungsschrauben 12 oder auf sonstige Weise am darunter liegenden Unterteil 8 befestigt.

Die Zwischenplatte 5 besitzt von den Befestigungsschrauben 6 ohne Gewindeeingriff durchsetzte Durchbrechungen 13. Somit ist die Zwischenplatte 5 zwischen dem Magnetkopf 5 und dem Grundkörper 2 fest eingespannt.

Im Übergangsbereich zwischen dem Magnetkopf 4 und dem Grundkörper 2 befindet sich eine Ventilkammer 14. In diese münden mehrere den Grundkörper 2 durchsetzende Ventilkanäle 15, 16. Das Magnetventil 1 des Ausführungsbeispiels ist als 2/2-Magnetventil konzipiert, so dass hier zwei Ventilkanäle 15, 16 mit der Ventilkammer 14 in Verbindung stehen. Beide Ventilkanäle münden an der der Ventilkammer 14 entgegengesetzten Seite zur Außenfläche des Grundkörpers 2 aus, wo ihnen Befestigungsmittel 17, beispielsweise Innengewinde, zugeordnet sind, die das Anschließen weiterführender Fluidleitungen zulassen.

Einer der Ventilkanäle 15 ist ein Speisekanal. Über ihn wird im Betrieb des Magnetventils 1 unter atmosphärischem Überdruck stehendes Druckmedium eingespeist, insbesondere Druckluft. Er kommuniziert unabhängig vom Schaltzustand des Magnetventils 1 ständig mit der Ventilkammer 14 und liefert auch den Schließdruck für das noch zu erläuternde Ventilglied 23.

Der andere Ventilkanal 16 ist ein Arbeitskanal. Er ist zur Verbindung mit einem zu betreibenden Verbraucher vorgesehen, wobei das Magnetventil 1 geeignet ist, die Verbindung zwischen dem Speisekanal 15 und dem Arbeitskanal 16 wahlweise freizugeben oder zu unterbrechen.

Der Arbeitskanal 16 mündet derart in die Ventilkammer 14, dass seine Mündung 18 in Richtung der Hauptachse 3 orientiert und dem Magnetkopf 4 zugewandt ist. Ihre Längsachse fällt zweckmäßigerweise mit der Hauptachse 3 zusammen. Ein in gleicher Weise orientierter ringförmiger Ventilsitz 22, der am Grundkörper 2 ausgebildet ist, umschließt die Mündung 18.

In der Ventilkammer 14 befindet sich ein in Richtung der Hauptachse 3 hin und her bewegbares Ventilglied 23. Dieses ist im Rahmen einer in Richtung der Hauptachse 3 verlaufenden, durch einen Doppelpfeil angedeuteten Schaltbewegung 24 zwischen zwei Schaltstellungen umschaltbar. Die erste Schaltstellung ist in Figur 1 angedeutet und entspricht beim Ausführungsbeispiel einer Schließstellung. Hierbei liegt das Ventilglied 23 an dem Ventilsitz 22 an und verschließt die Mündung 18. Gleichzeitig ist hierdurch die Fluidverbindung zwischen den beiden Ventilkanälen 15, 16 unterbrochen. In der nicht dargestellten zweiten Schaltstellung ist das Ventilglied 23 vom Ventilsitz 22 abgehoben. Diese zweite Schaltstellung bildet beim Ausführungsbeispiel eine Offenstellung, indem über die Ventilkammer 14 hinweg eine fluidische Verbindung zwischen den beiden Ventilkanälen 15, 16 frei geschaltet ist.

Der Schalthub des Ventilgliedes 23 ist beim Ausführungsbeispiel relativ gering.

Das Ventilglied 23 ist von einem beweglichen Magnetanker 25 gebildet, dessen Schaltbewegung 24 durch eine im Magnetkopf 4 untergebrachte Elektromagneteinrichtung 26 gesteuert wird. Der bewegliche Magnetanker 25 ist von einem aus weichmagnetischem Material, insbesondere Weicheisen bestehenden plattenförmigen Element gebildet, das so in der Ventilkammer 14 angeordnet ist, dass seine beiden einander entgegengesetzten großflächigen Grundflächen 28a, 28b in Richtung der Hauptachse orientiert sind. Die Hauptachse 3 verläuft rechtwinkelig zur Plattenebene des Magnetankers 25.

Bei der Schaltbewegung 24 führt der Magnetanker 25 zweckmäßigerweise eine translatorische Bewegung unter Beibehaltung seiner räumlichen Ausrichtung aus. Allerdings könnte der Magnetanker 25 bei der Schaltbewegung 24 auch, gegebenenfalls zusätzlich, eine leichte Schwenkbewegung ausführen.

Die dem Magnetkopf 4 zugewandte Grundfläche 28a des beweglichen Magnetankers 25 sei im Folgenden der Einfachheit halber als obere Grundfläche 28a bezeichnet, ohne dass hiermit eine Einschränkung verbunden sein soll. Entsprechend wird die entgegengesetzte Grundfläche 28b im Folgenden als untere Grundfläche 28b angesprochen.

Die Elektromagneteinrichtung 26 enthält eine ortsfeste Magnetkernanordnung 27 mit einer Polflächenanordnung, die sich aus mehreren, im aktivierten Zustand der Elektromagneteinrichtung 26 unterschiedlich polarisierten Polflächen 32a, 32b zusammensetzt. Diese Polflächen 32a, 32b verlaufen in einer gemeinsamen, zur Hauptachse 3 rechtwinkeligen Ebene und liegen unmittelbar axial im Anschluss an die Ventilkammer 14, wobei sie der oberen Grundfläche 28a des beweglichen Magnetankers 25 zugewandt sind. Die mehreren Polflächen 32a, 32b sind quer zu der Hauptachse 3 beabstandet zueinander platziert.

Beim Ausführungsbeispiel besteht die Magnetkernanordnung 27 aus einem U-förmigen Magnetkern mit zwei zur Hauptachse 3 parallelen Magnetkernschenkeln 33a, 33b, deren dem Grundkörper 2 zugewandte Stirnfläche je eine von zwei unterschiedlich polarisierten Polflächen 32a, 32b bilden. An ihren entgegengesetzten Endbereichen sind die Magnetkernschenkel 33a, 33b durch einen Magnetkernquersteg 34 miteinander verbunden.

Der Magnetkernanordnung 27 ist eine Spulenanordnung zugeordnet, die sich beim Ausführungsbeispiel aus zwei jeweils einen der Magnetkernschenkel 33a, 33b koaxial umschließenden Spulen 35a, 35b zusammensetzt. Über von außen her zugängliche elektrische Kontaktelemente 36 des Magnetkopfes 4 kann die Spulenanordnung 35a, 35b und mithin die Elektromagneteinrichtung 26 nach Wahl elektrisch aktiviert oder deaktiviert werden.

Anstelle des U-förmigen Magnetkernes könnte beispielsweise auch ein E-förmiger Magnetkern vorgesehen werden oder jegliche andere Magnetkerngestaltung, aus der mehrere dem Magnetanker 25 zugewandte Polflächen unterschiedlicher Polarität resultieren. Die Spulenanordnung könnte beispielsweise auch nur eine Spule oder mehr als zwei Spulen enthalten.

Bei Aktivierung der Elektromagneteinrichtung 26 wird der das Ventilglied 23 bildende Magnetanker 25 in Richtung zu den beiden Polflächen 32a, 32b gezogen, wobei er vom Ventilsitz 22 abhebt. Der diesem Öffnungsvorgang entgegengesetzte Schließvorgang des Magnetankers 25 wird allein durch die am Magnetanker 25 angreifenden Fluidkräfte hervorgerufen, wenn die Elektromagneteinrichtung 26 deaktiviert wird. Diese Fluidkräfte werden durch das in der Ventilkammer befindliche, über die Ventilkanäle 15, 16 zu- und abgeführte Fluid hervorgerufen und basieren insbesondere aus der im Bereich der Mündung 18 vorhandenen Druckdifferenz zwischen den beiden einander entgegengesetzten Grundflächen 28a, 28b. Eine Federunterstützung der Schaltbewegung 24 ist mithin bei keiner der Schaltbewegungen vorhanden.

Dies hat den Vorteil, dass der Magnetanker 25 in Richtung der Hauptachse 3 lose in der Ventilkammer 14 angeordnet sein kann. Zweckmäßig ist es allerdings, für eine Lagestabilisierung des Magnetankers 25 quer zur Hauptachse 3 zu sorgen, was durch geeignete Führungsflächen 37 bewerkstelligt werden kann, die den Magnetanker 25 im Bereich seiner seitlichen Randflächen flankieren.

Durch den Verzicht auf mechanische Federmittel können besonders hohe Schaltfrequenzen des Magnetankers 25 verwirklicht werden.

Die gesamte Elektromagneteinrichtung 26 ist zweckmäßigerweise in einem Gehäuse 38 des Magnetkopfes untergebracht. Die einzelnen Komponenten können vom Gehäusematerial umspritzt sein.

Bei dem erfindungsgemäßen Magnetventil 1 kann der bewegliche Magnetanker 25 mit sehr hoher Kraft und auch mit sehr hoher Geschwindigkeit bewegt werden, weil zwischen der Polflächenanordnung 32a, 32b und dem Magnetanker 25 eine zusätzliche Dämpfungsplattenanordnung 42 platziert ist, die den Aufprall des Magnetankers auf ein verträgliches Maß reduziert. Die Dämpfungsplattenanordnung 42 besteht aus einem nicht ferromagnetischen Material, beispielsweise Aluminium- oder Kunststoffmaterial, und erstreckt sich zumindest teilweise über jede der unterschiedlich polarisierten Polflächen 32a, 32b hinweg.

Es ist zweckmäßig, wenn die Dämpfungsplattenanordnung 42 zumindest denjenigen Flächenabschnitt einer jeweiligen Polfläche 32a, 32b überdeckt, über den hinweg sich auch der bewegliche Magnetanker 25 erstreckt. Beim Ausführungsbeispiel liegen die beiden Polflächen 32a, 32b - in Richtung der Hauptachse 3 gesehen - jeweils zur Gänze innerhalb des Grundrisses des bevorzugt einstückigen Magnetankers 25, was aus Figur 2 gut ersichtlich ist. Somit sollte sich die Dämpfungsplattenanordnung 42 zumindest über diese Bereiche hinweg erstrecken.

Die Dämpfungsplattenanordnung 42 könnte sich aus mehreren getrennten Dämpfungsplatten zusammensetzen, deren Anzahl der Polflächen 32a, 32b entspricht, wobei jeder Polfläche 32a, 32b eine solche gesonderte Dämpfungsplatte zugeordnet ist. Als besonders vorteilhaft wird allerdings die beim Ausführungsbeispiel realisierte Bauform angesehen, bei der die Dämpfungsplattenanordnung 42 aus einer einzigen, zusammenhängenden Dämpfungsplatte 43 besteht, die sämtliche Polflächen 32a, 32b überdeckt.

Bei einer nicht dargestellten Ausführungsform befindet sich die Dämpfungsplattenanordnung 42 direkt an der oberen Grundfläche 28a des Magnetankers 25 und macht dessen Bewegungen mit. Die Dämpfungsplatte 43 könnte hier beispielsweise anvulkanisiert, durch Spritzgießen angeformt oder auf sonstige Weise am beweglichen Magnetanker 25 befestigt sein. Als besonders vorteilhaft wird allerdings die Ausführungsvariante des Ausführungsbeispiels eingestuft, bei der die bevorzugt einzige Dämpfungsplatte 43 bezüglich der Magnetkernanordnung 27 ortsfest angeordnet ist, und zwar insbesondere derart, dass sie rückseitig direkt an sämtlichen der Polflächen 32a, 32b anliegt.

Um dies zu realisieren, ist die Dämpfungsplatte 43 zweckmäßigerweise ein integraler und bevorzugt ein einstückiger Bestandteil der oben erwähnten Zwischenplatte 5. Die Zwischenplatte 5 bildet also selbst, mit ihrem zwischen dem Magnetanker 25 und der Polflächenanordnung 32a, 32b angeordneten Abschnitt, die Dämpfungsplatte 43. Dies ermöglicht eine besonders einfache Herstellung und Montage.

Die Zwischenplatte 5 ist bevorzugt ein bezüglich dem Magnetkopf 4 gesondertes Bauteil. Bei der Installation des Magnetkopfes 4 wird dieser rückseitig an die Zwischenplatte 5 angesetzt, wobei die Polflächen 32a, 32b mit der Dämpfungsplatte 43 in Kontakt treten.

Bei einer nicht naher dargestellten Ausführungsform ist die Zwischenplatte 5 zu einer Baugruppe mit dem Magnetkopf 4 zusammengefasst.

Auch wenn keine Zwischenplatte 5 vorhanden ist, kann die Dämpfungsplattenanordnung 42 ein unmittelbarer Bestandteil des Magnetkopfes 4 sein.

In Verbindung mit der vorhandenen Zwischenplatte 5 ergibt sich der weitere Vorteil, dass die Ventilkammer 14 gemeinsam durch den Grundkörper 2 und die Zwischenplatte 5 gebildet werden kann. Mit anderen Worten bildet die Zwischenplatte 5 in diesem Fall eine dem Magnetkopf 4 zum Grundkörper 2 hin axial vorgelagerte Begrenzungswand der Ventilkammer 14. Eine axial zwischen der Zwischenplatte 5 und dem Grundkörper 2 angeordnete Dichtung 44 umrahmt die Ventilkammer 14 und sorgt für eine Abdichtung im Fügebereich der beiden Komponenten.

Beim Ausführungsbeispiel sitzt die Zwischenplatte 5 nach Art eines Deckels auf dem Grundkörper 2. Abgesehen von den Durchbrechungen 13 ist sie gasdicht. Somit kann kein Druckmedium in den Magnetkopf 4 eindringen.

Zweckmäßigerweise ist der bewegliche Magnetanker 25 dem Grundkörper 2 in Richtung zum Magnetkopf 4 vorgelagert. Er kann zur Gänze in der Zwischenplatte 5 aufgenommen sein. Hierbei sitzt der Magnetanker 25 in einer mit ihrer Öffnung dem Grundkörper 2 zugewandten Ausnehmung 45 der Zwischenplatte 5, wobei der Boden dieser Ausnehmung 45 unmittelbar selbst die Dämpfungsplatte 43 bildet. Die schon erwähnten Führungsflächen 37 werden von der Seitenwand der Ausnehmung 45 definiert.

Damit bei der Schaltbewegung 24 kaum Reibung zwischen dem Magnetanker 25 und den seitlichen Führungsflächen 37 auftritt, ist der Magnetanker 25 bevorzugt mit relativ viel Spiel quer zur Hauptachse 3 in der Ausnehmung 35 angeordnet.

Die den Aufprall des Magnetankers 25 reduzierende Wirkung der Dämpfungsplattenanordnung 42 resultiert zweckmäßigerweise aus der Federelastizität und dem zusätzlich vorhandenen Dämpfungsvermögen der Dämpfungsplattenanordnung 42. Diese Faktoren können insbesondere über das Material, die in Richtung der Schaltbewegung 24 gemessene Dicke und die geometrische Gestaltung der Dämpfungsplattenanordnung 42 beeinflusst werden. Man wird die Abstimmung insbesondere so treffen, dass die zulässige Flächenpressung der miteinander in Kontakt gelangenden Materialien nicht überschritten wird.

Durch die Zwischenfügung der Dämpfungsplatte 43 können somit relativ starke Elektromagneteinrichtungen 26 zum Erhalt hochfrequenter Schaltbewegungen selbst bei äußerst hohen Fluiddrücken eingesetzt werden, ohne dass eine Beschädigungsgefahr auftritt.

Was die geometrische Gestaltung der Dämpfungsplattenanordnung 42 anbelangt, ist beispielsweise eine Bauform möglich, bei der die Dämpfungsplatte zumindest in den die Polflächenanordnung 32a, 32b überdeckenden Bereichen und vorzugsweise zur Gänze eine konstante Wandstärke aufweist. Über das gewählte Maß der Wandstärke lässt sich die Aufprallkraft des beweglichen Magnetankers beeinflussen.

Beim Ausführungsbeispiel wird die Aufprallkraft in besonderer Weise durch eine an der dem beweglichen Magnetanker 25 zugewandten Seite der Dämpfungsplatte 43 integral ausgebildete Oberflächenstruktur 46 beeinflusst. Diese setzt sich aus einem Muster gebildet aus einer Mehrzahl von Erhebungen 47 und Vertiefungen 48 zusammen. Der zu den Polflächen 32a, 32b gezogene Magnetanker 25 prallt auf die vorspringenden Erhebungen 47 auf, die sich leichte verformen als wenn eine durchgängige Aufprallfläche vorhanden wäre.

Die Oberflächenstruktur 46 des Ausführungsbeispiels zeichnet sich durch eine Vielzahl abwechselnd aufeinanderfolgend angeordneter, zueinander paralleler rippenartiger Erhebungen 47 und dazwischen liegender nutartiger Vertiefung 48 aus. Handelt es sich um einen Magnetanker 25 mit länglicher Gestalt, wie dies beim Ausführungsbeispiel der Fall ist, empfiehlt sich eine Ausrichtung der Erhebungen 47 und Vertiefungen 48 quer und insbesondere rechtwinkelig zur Längsachse des Magnetankers 25.

Besonders geeignet als Material für die Dämpfungsplattenanordnung 42 ist jedes Kunststoffmaterial, das die gewünschten Federungs- und/oder Dämpfungseigenschaften aufweist.

Eine mit einer Oberflächenstruktur 46 versehene Dämpfungsplattenanordnung 42 kann in vorteilhafter Weise zur Detektion der an die Magnetkernanordnung 27 angezogenen zweiten Schaltstellung des beweglichen Magnetankers 25 eingesetzt werden. Derartige Mittel zur Schaltstellungsanzeige sind in Figur 1 strichpunktiert angedeutet.

In diesem Fall kann ein Stromkreis 52 vorgesehen werden, der zwei strichpunktiert angedeutete elektrische Leiter 53a, 53b aufweist, die zu einer externern oder insbesondere in den Magnetkopf 4 integrierten, nicht näher dargestellten elektrischen Auswerteeinrichtung führen. Andernends enden die beiden Leiter 53a, 53b jeweils an einer eigens zugeordneten, elektrisch leitenden Kontaktfläche 54a, 54b, die an der dem Magnetanker 25 zugewandten Oberfläche zweier zueinander beabstandeter Erhebungen 47 angebracht sind. Diese Kontaktflächen 54a, 54b bilden zusammen mit dem als Schaltelement fungierenden, aus elektrisch leitfähigem Material bestehenden beweglichen Magnetanker 25 einen elektrischen Schalter. Liegt der weichmagnetische Magnetanker 25 an der Dämpfungsplattenanordnung 42 an, schließt er durch gleichzeitigen Kontakt mit den beiden Kontaktflächen 54a, 54b den Stromkreis 52, woraus ein das Erreichen der zweiten Schaltstellung meldendes elektrisches Signal resultiert.

Die Kontaktflächen 54a, 54b können relativ einfach durch auf die in diesem Fall aus elektrisch nicht leitendem Material bestehende Dämpfungsplatte 43 aufgebrachten Metallschichten gebildet sein. Diese können durch einen Metallisierungsprozess aufgebracht werden, beispielsweise bei einer Herstellung des Magnetankers 25 als MID-Komponente (MID = Molded Interconnect Device).

## Patentansprüche

1. Magnetventil, mit einem von Ventilkanälen (15, 16) durchsetzten Grundkörper (2) und einem eine Elektromagneteinrichtung (26) aufweisenden Magnetkopf (4), die in Richtung einer Hauptachse (3) aufeinanderfolgend angeordnet sind und zwischen denen sich eine mit mehreren Ventilkanälen (15, 16) kommunizierende Ventilkammer (14) befindet, die einen als Ventilglied (23) fungierenden, in Richtung der Hauptachse (3) beweglichen Magnetanker (25) enthält, der ein plattenförmiges Element mit in Richtung der Hauptachse (3) orientierten Grundflächen (28a, 28b) ist, wobei eine ortsfeste Magnetkernanordnung (27) der Elektromagneteinrichtung (26) eine dem beweglichen Magnetanker (25) zugewandte Polflächenanordnung aufweist, von der der bewegliche Magnetanker (25) bei elektrischer Aktivierung der Elektromagneteinrichtung (26) angezogen wird und wobei sich zwischen der Polflächenanordnung und dem beweglichen Magnetanker (25) eine der Reduzierung des Magnetankeraufpralles dienende, aus nicht ferromagnetischem Material bestehende Dämpfungsplattenanordnung (42) befindet, **dadurch gekennzeichnet, dass** dem beweglichen Magnetanker (25) mehrere quer zu der Hauptachse (3) zueinander beabstandete Polflächen (32a, 32b) unterschiedlicher Polarität der Polflächenanordnung gegenüberliegen, wobei die Dämpfungsplattenanordnung (42) ortsfest bezüglich der Magnetkernanordnung (27) angeordnet ist und sich über jede der unterschiedlich polarisierten Polflächen (32a, 32b) zumindest teilweise hinweg erstreckt.

2. Magnetventil nach Anspruch 1, **dadurch gekennzeichnet, dass** die Dämpfungsplattenanordnung (42) aus einer einzigen, sich gleichzeitig wenigstens teilweise über jede der unterschiedlich polarisierten Polflächen (32a, 32b) hinweg erstreckenden Dämpfungsplatte (43) besteht.

3. Magnetventil nach Anspruch 1 oder 2, **dadurch gekennzeichnet, dass** die Dämpfungsplattenanordnung (42) integraler und bevorzugt einstückiger Bestandteil einer zwischen dem Grundkörper (2) und dem Magnetkopf (4) angeordneten Zwischenplatte (5) ist.

4. Magnetventil nach Anspruch 3, **dadurch gekennzeichnet, dass** der Magnetkopf (4) und der Grundkörper (2) unter Zwischenschaltung der Zwischenplatte (5) in Richtung der Hauptachse (3) miteinander verspannt sind.

5. Magnetventil nach Anspruch 3 oder 4, **dadurch gekennzeichnet, dass** die Zwischenplatte (5) eine mit ihrer Öffnung dem Grundkörper (2) zugewandte Ausnehmung (45) aufweist, in der der bewegliche Magentanker (25) ganz oder teilweise aufgenommen ist und deren Boden die Dämpfungsplattenanordnung (42) bildet.

6. Magnetventil nach Anspruch 5, **dadurch gekennzeichnet, dass** die Seitenwand der Ausnehmung (45) mindestens eine Führungsfläche (37) für den sich bewegenden Magnetanker (25) bildet.

7. Magnetventil nach einem der Ansprüche 3 bis 6, **dadurch gekennzeichnet, dass** die Zwischenplatte (5) eine dem Magnetkopf (4) vorgelagerte Begrenzungswand der Ventilkammer (14) bildet.

8. Magnetventil nach Anspruch 7, **dadurch gekennzeichnet, dass** die Zwischenplatte (5) gemeinsam mit dem Grundkörper (2) die Ventilkammer (14) definiert.

9. Magnetventil nach Anspruch 8, **dadurch gekennzeichnet, dass** die Zwischenplatte (5) unter Abdichtung an den Grundkörper (2) angesetzt ist.

10. Magnetventil nach einem der Ansprüche 1 bis 9, **dadurch gekennzeichnet, dass** die Dämpfungsplattenanordnung (42) eine geschlossene Plattenfläche aufweist.

11. Magnetventil nach einem der Ansprüche 1 bis 10, **dadurch gekennzeichnet, dass** die Dämpfungsplattenanordnung (42) zumindest in den die Polflächenanordnung (32a, 32b) überdeckenden Bereichen eine konstante Wandstärke aufweist.

12. Magnetventil nach einem der Ansprüche 1 bis 10, **dadurch gekennzeichnet, dass** die Dämpfungsplattenanordnung (42) an der Aufprallseite eine durch Erhebungen (47) und Vertiefungen (48) gebildete Oberflächenstruktur (46) aufweist.

13. Magnetventil nach Anspruch 12, **dadurch gekennzeichnet, dass** die Oberflächenstruktur (46) der Dämpfungsplattenanordnung (42) eine Vielzahl zueinander paralleler rippenartiger Erhebungen (47) und zwischen den Erhebungen (47) liegenden nutartigen Vertiefungen (48) enthält.

14. Magnetventil nach Anspruch 13, **dadurch gekennzeichnet, dass** der bewegliche Magnetanker (25) längliche Gestalt aufweist, wobei die Erhebungen (47) und Vertiefungen (48) quer und insbesondere rechtwinkelig zu seiner Längsachse verlaufen.

15. Magnetventil nach einem der Ansprüche 12 bis 14, **gekennzeichnet durch** Mittel zur Schaltstellungsanzeige des aus weichmagnetischem Material bestehenden beweglichen Magnetankers (25), die einen in einem Stromkreis (52) angeordneten Schalter aufweisen, der zwei an den Erhebungen (47) vorgesehene, mit jeweils einem Leiter (53a, 53b) des Stromkreises (52) verbundene, elektrisch leitende Kontaktflächen (54a, 54b) enthält und der als Schaltelement den Magnetanker (25) beinhaltet, der in der an der Dämpfungsplattenanordnung (42) anliegenden Schaltstellung den Stromkreis schließt, indem er gleichzeitig mit den beiden Kontaktflächen (54a, 54b) in Kontakt tritt.

16. Magnetventil nach Anspruch 15, **dadurch gekennzeichnet, dass** die Kontaktflächen (54a, 54b) von Metallschichten an Erhebungen (47) der Dämpfungsplattenanordnung (42) gebildet sind.

17. Magnetventil nach einem der Ansprüche 1 bis 16, **dadurch gekennzeichnet, dass** dem beweglichen Magnetanker (25) an der dem Magnetkopf (4) abgewandten Unterseite mindestens ein zu einem Ventilkanal (16) gehörender Ventilsitz (22) gegenüberliegt, wobei der bewegliche Magnetanker (25) bei aktivierter Elektromagneteinrichtung (26) von dem Ventilsitz (22) abgehoben und bei deaktivierter Elektromagneteinrichtung (26), insbesondere allein durch das in der Ventilkammer (14) befindliche Fluid, zum Ventilsitz (22) hin verlagert und dort gehalten wird.

18. Magnetventil nach einem der Ansprüche 1 bis 17, **dadurch gekennzeichnet, dass** der bewegliche Magnetanker (25) in Richtung der Hauptachse (3) lose in der Ventilkammer (14) angeordnet ist.

19. Magnetventil nach einem der Ansprüche 1 bis 18, **gekennzeichnet durch** eine Ausgestaltung als 2/2-Wegeventil.

20. Magnetventil nach einem der Ansprüche 1 bis 19, **dadurch gekennzeichnet, dass** die Magnetkernanordnung (27) aus einem U- oder E-förmigen Magnetkern besteht.

21. Magnetventil nach einem der Ansprüche 1 bis 20, **dadurch gekennzeichnet, dass** die Dämpfungsplattenanordnung (42) aus nicht ferromagnetischem Metall oder aus Kunststoffmaterial besteht.

## Claims

1. Solenoid valve, with a base body (2) through which pass valve passages (15, 16) and a magnetic head (4) with an electromagnetic device (26), arranged consecutively in the direction of a main axis (3) and between which is a valve chamber (14) communicating with several valve passages (15, 16) and containing a solenoid armature (25) movable in the direction of the main axis (3) and acting as valve member (23) and which is a platelike element with base areas (28a, 28b) oriented in the direction of the main axis (3), wherein a stationary magnet core assembly (27) of the electromagnetic device (26) has a pole surface arrangement facing the movable solenoid armature (25) and by which the movable solenoid armature (25) is attracted on electrical activation of the electromagnetic device (26), and wherein between the pole surface arrangement and the movable solenoid armature (25) there is a damping plate assembly (42) made of non-ferromagnetic material and serving to reduce the impact of the solenoid armature, **characterised in that** opposite the movable solenoid armature (25) are several pole surfaces (32a, 32b) of the pole surface arrangement with different polarity, spaced apart at right-angles to the main axis (3), wherein the damping plate assembly (42) is stationary relative to the magnet core assembly (27) and extends at least partly beyond each of the pole surfaces (32a, 32b) of different polarity.

2. Solenoid valve according to claim 1, **characterised in that** the damping plate assembly (42) comprises a single damping plate (43) extending simultaneously at least partly beyond each of the pole surfaces (32a, 32b) of different polarity.

3. Solenoid valve according to claim 1 or 2, **characterised in that** the damping plate assembly (42) is an integral and preferably one-piece part of an intermediate plate (5) located between the base body (2) and the magnetic head (4).

4. Solenoid valve according to claim 3, **characterised in that** the magnetic head (4) and the base body (2) are clamped together in the direction of the main axis (3) with the intermediate plate (5) fitted between them.

5. Solenoid valve according to claim 3 or 4, **characterised in that** the intermediate plate (5) has a recess (45) with its opening facing the base body (2), in which the movable solenoid armature (25) is wholly or partly accommodated and the base of which forms the damping plate assembly (42).

6. Solenoid valve according to claim 5, **characterised in that** the side wall of the recess (45) forms one or more guide surfaces (37) for the movable solenoid armature (25).

7. Solenoid valve according to any of claims 3 to 6, **characterised in that** the intermediate plate (5) forms a boundary wall of the valve chamber (14) located in front of the magnetic head (4).

8. Solenoid valve according to claim 7, **characterised in that** the intermediate plate (5) together with the base body (2) defines the valve chamber (14).

9. Solenoid valve according to claim 8, **characterised in that** the intermediate plate (5) is attached with sealing to the base body (2).

10. Solenoid valve according to any of claims 1 to 9, **characterised in that** the damping plate assembly (42) has an enclosed plate surface.

11. Solenoid valve according to any of claims 1 to 10, **characterised in that** the damping plate assembly (42) has a constant wall thickness, at least in the areas covering the pole surface assembly (32a, 32b).

12. Solenoid valve according to any of claims 1 to 10, **characterised in that** the damping plate assembly (42) has on the impact side a surface structure (46) formed by elevations (47) and depressions (48).

13. Solenoid valve according to claim 12, **characterised in that** the surface structure (46) of the damping plate assembly (42) contains a multiplicity of parallel rib-like elevations (47), and slot-like depressions (48) lying between the elevations (47).

14. Solenoid valve according to claim 13, **characterised in that** the movable solenoid armature (25) has an elongated shape, wherein the elevations (47) and depressions (48) run transversely and in particular at right-angles to its longitudinal axis.

15. Solenoid valve according to any of claims 12 to 14, **characterised by** means of displaying the switch position of the movable solenoid armature (25) made of magnetically soft material, which has a switch located in a circuit (52) containing two electrically conductive contact faces (54a, 54b) provided on the elevations (47), each connected to a conductor (53a, 53b) of the circuit (52), and containing as switching element the solenoid armature (25) which closes the circuit in the switch position fitting up against the damping plate assembly (42) by simultaneously coming into contact with the two contact faces (54a, 54b).

16. Solenoid valve according to claim 15, **characterised in that** the contact faces (54a, 54b) are formed by metallic coatings on elevations (47) of the damping plate assembly (42).

17. Solenoid valve according to any of claims 1 to 16, **characterised in that** opposite the movable solenoid armature (25) on the bottom side facing away from the magnetic head (4) is at least one valve seat (22) belonging to a valve passage (16), wherein with the electromagnetic device (26) activated the movable solenoid armature (25) is lifted from the valve seat (22), and with the electromagnetic device (26) deactivated, in particular solely by the fluid present in the valve chamber (14), it is shifted towards the valve seat (22) and held there.

18. Solenoid valve according to any of claims 1 to 17, **characterised in that** the movable solenoid armature (25) is mounted loosely in the valve chamber (14) in the direction of the main axis (3).

19. Solenoid valve according to any of claims 1 to 18, **characterised by** being in the form of a 2/2-way valve.

20. Solenoid valve according to any of claims 1 to 19, **characterised in that** the magnet core assembly (27) is comprised of a U- or E-shaped magnet core.

21. Solenoid valve according to any of claims 1 to 20, **characterised in that** the damping plate assembly (42) is made of non-ferromagnetic metal or of plastic.

## Revendications

1. Vanne magnétique, comportant un corps de base (2), à travers lequel passent des canaux de vanne (15, 16), et une tête magnétique (4) munie d'un dispositif électromagnétique (26), lesquels sont disposés l'un derrière l'autre dans la direction d'un axe principal (3) et entre lesquels se situe une chambre de vanne (14), qui communique avec plusieurs canaux de vanne (15, 16) et qui contient un induit magnétique (25), qui est mobile dans la direction de l'axe principal (3) et remplit la fonction d'un obturateur de vanne (23) et qui est réalisé sous la forme d'un élément plat avec des surfaces de base (28a, 28b) orientées dans la direction de l'axe principal (3), un système à noyau magnétique (27) stationnaire du dispositif électromagnétique (26) comportant un système à surfaces polaires, qui est orienté vers l'induit magnétique (25) mobile et par lequel l'induit magnétique (25) mobile est attiré lors de l'activation électrique du dispositif électromagnétique (26) et un système de plaque d'amortissement (42), réalisé dans un matériau non ferromagnétique et destiné à atténuer l'impact de l'induit magnétique, étant situé entre le système à surfaces polaires et l'induit magnétique (25) mobile, **caractérisée en ce que** plusieurs surfaces polaires (32a, 32b) du système à surfaces polaires, ayant une polarité différente et étant écartées les unes des autres transversalement à l'axe principal (3), sont situées en face de l'induit magnétique (25) mobile, le système de plaque d'amortissement (42) étant monté de manière fixe par rapport au système à noyau magnétique (27) et s'étendant au moins en partie au-delà de chacune des surfaces polaires (32a, 32b) à polarité différente.

2. Vanne magnétique selon la revendication 1, **caractérisée en ce que** le système de plaque d'amortissement (42) est formé par une seule plaque d'amortissement (42) qui s'étend simultanément au moins en partie au-delà de chacune des surfaces polaires (32a, 32b) à polarité différente.

3. Vanne magnétique selon la revendication 1 ou 2, **caractérisée en ce que** le système de plaque d'amortissement (42) est une partie intégrante et de préférence d'un seul tenant d'une plaque intermédiaire (5) disposée entre le corps de base (2) et la tête magnétique (4).

4. Vanne magnétique selon la revendication 3, **caractérisée en ce que** la tête magnétique (4) et le corps de base (2) sont attachés l'un à l'autre moyennant le montage intercalé de la plaque intermédiaire (5) dans la direction de l'axe principal (3).

5. Vanne magnétique selon la revendication 3 ou 4, **caractérisée en ce que** la plaque intermédiaire (5) comporte un évidement (45), qui est orienté avec son ouverture vers le corps de base (2) et dans lequel est logé en entier ou en partie l'induit magnétique (25) mobile et dont le fond forme le système de plaque d'amortissement (42).

6. Vanne magnétique selon la revendication 5, **caractérisée en ce que** la paroi latérale de l'évidement (45) forme au moins une surface de guidage (37) pour l'induit magnétique (25) mobile.

7. Vanne magnétique selon l'une des revendications 3 à 6, **caractérisée en ce que** la plaque intermédiaire (5) forme une paroi de la chambre de vanne (14), montée en amont de la tête magnétique (4).

8. Vanne magnétique selon la revendication 7, **caractérisée en ce que** la plaque intermédiaire (5) définit, conjointement avec le corps de base (2), la chambre de vanne (14).

9. Vanne magnétique selon la revendication 8, **caractérisée en ce que** la plaque intermédiaire (5) est disposée contre le corps de base (2) avec étanchéité.

10. Vanne magnétique selon l'une des revendications 1 à 9, **caractérisée en ce que** le système de plaque d'amortissement (42) comporte une surface de plaque fermée.

11. Vanne magnétique selon l'une des revendications 1 à 10, **caractérisée en ce que** le système de plaque d'amortissement (42) comporte une épaisseur de paroi constante au moins dans les zones couvrant le système à surfaces polaires (32a, 32b).

12. Vanne magnétique selon l'une des revendications 1 à 10, **caractérisée en ce que** le système de plaque d'amortissement (42), sur le côté impact, comporte une structure de surface (46) formée par des bosses (47) et des creux (48).

13. Vanne magnétique selon la revendication 12, **caractérisée en ce que** la structure de surface (46) du système de plaque d'amortissement (42) contient une pluralité de bosses (47), en forme de nervures parallèles entre elles, et de creux (48), en forme de rainures situées entre les bosses (47).

14. Vanne magnétique selon la revendication 13, **caractérisée en ce que** l'induit magnétique (25) mobile présente une forme allongée, les bosses (47) et les creux (48) étant orientés transversalement et, en particulier, perpendiculairement à l'axe longitudinal de celui-ci.

15. Vanne magnétique selon l'une des revendications 12 à 14, **caractérisée par** des moyens de signalisation de la position de commutation de l'induit magnétique (25) mobile, réalisé dans un matériau magnétique doux, lesquels comportent un commutateur, qui est placé dans un circuit électrique (52) et qui comporte deux surfaces de contact (54a, 54b) électroconductrices, prévues sur les bosses (47) et reliées chacune à un conducteur (53a, 53b) du circuit électrique (52), et qui comprend l'induit magnétique (25) formant un élément de commutation, lequel ferme le circuit électrique dans la position de commutation en appui contre le système de plaque d'amortissement (42), du fait qu'il entre en même temps en contact avec les deux surfaces de contact (54a, 54b).

16. Vanne magnétique selon la revendication 15, **caractérisée en ce que** les surfaces de contact (54a, 54b) sont formées par des couches métalliques sur les bosses (47) du système de plaque d'amortissement (42).

17. Vanne magnétique selon l'une des revendications 1 à 16, **caractérisée en ce qu'**au moins un siège de vanne (22), appartenant à un canal de vanne (16), est situé en regard de l'induit magnétique (25) mobile sur la face inférieure opposée à la tête magnétique (4), sachant que; lorsque le dispositif électromagnétique (26) est activé, l'induit magnétique (25) mobile est soulevé du siège de vanne (22) et, lorsque le dispositif électromagnétique (26) est désactivé, il est déplacé vers le siège de vanne (22) et maintenu contre celui-ci, en particulier uniquement par le fluide contenu dans la chambre de vanne (14).

18. Vanne magnétique selon l'une des revendications 1 à 17, **caractérisée en ce que** l'induit magnétique (25) mobile est monté dans la chambre de vanne (14) de manière lâche dans la direction de l'axe principal (3).

19. Vanne magnétique selon l'une des revendications 1 à 18, **caractérisée par** une configuration sous forme de vanne à 2/2 voies.

20. Vanne magnétique selon l'une des revendications 1 à 19, **caractérisée en ce que** le système à noyau magnétique (27) est formé par un noyau magnétique en forme de U ou de E.

21. Vanne magnétique selon l'une des revendications 1 à 20, **caractérisée en ce que** le système de plaque d'amortissement (42) est réalisé dans un métal non ferromagnétique ou en matière plastique.
